(19) Europäisches Patentamt
European Patent Office
Office européen des brevets

(11) EP 2 162 392 B1

(12) FASCICULE DE BREVET EUROPEEN

(45) Date de publication et mention
de la délivrance du brevet:
**29.08.2012 Bulletin 2012/35**

(51) Int Cl.:
*C01B 39/48* (2006.01)   *B01J 29/70* (2006.01)

(21) Numéro de dépôt: **08787956.5**

(86) Numéro de dépôt international:
**PCT/FR2008/000525**

(22) Date de dépôt: **14.04.2008**

(87) Numéro de publication internationale:
**WO 2008/152214 (18.12.2008 Gazette 2008/51)**

(54) **PROCEDE DE PREPARATION DE LA ZEOLITHE EU-1**

VERFAHREN ZUR HERSTELLUNG VON ZEOLITH EU-1

PROCESS FOR PREPARING ZEOLITE EU-1

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **25.05.2007 FR 0703701**

(43) Date de publication de la demande:
**17.03.2010 Bulletin 2010/11**

(73) Titulaire: **IFP Energies nouvelles
92852 Rueil-Malmaison Cedex (FR)**

(72) Inventeurs:
• **GOERGEN, Simone
Tufts University
Medford, MA 02155 (US)**
• **ROULEAU, Loïc
F-69390 Charly (FR)**
• **PATARIN, Joël
F-68720 Flaxlanden (FR)**

(56) Documents cités:
• **ARNOLD A ET AL: "Dry-gel synthesis of zeolites [Al]EU-1 and [Ga]EU-1" MICROPOROUS AND MESOPOROUS MATERIALS, ELSEVIER SCIENCE PUBLISHING, NEW YORK, US, vol. 67, no. 2-3, 6 février 2004 (2004-02-06), pages 205-213, XP004485734 ISSN: 1387-1811**
• **ARNOLD A ET AL: "Insight into the dry-gel synthesis of gallium-rich zeolite [Ga]Beta" MICROPOROUS AND MESOPOROUS MATERIALS, ELSEVIER SCIENCE PUBLISHING, NEW YORK, US, vol. 62, no. 1-2, 14 août 2003 (2003-08-14), pages 97-106, XP004441138 ISSN: 1387-1811**

## Description

<u>Domaine technique</u>

La présente invention se rapporte à un nouveau procédé de préparation d'une zéolithe EU-1 ayant un rapport $XO_2/Y_2O_3$ compris entre 10 et 100 et en particulier un rapport $SiO_2/Al_2O_3$ compris entre 10 et 100, mettant en oeuvre une étape b) de séchage réalisée à la suite d'une étape de préparation du mélange réactionnel et préalablement à une étape c) de traitement hydrothermal.

<u>Art antérieur</u>

La zéolithe EU-1, de type structural EUO est décrite dans l'art antérieur (W.M. Meier et D.H. Olson, « Atlas of Zeolite Structure types », 5ème Edition, 2001) et présente un réseau microporeux monodimensionnel, dont le diamètre des pores est de 4,1 x 5,7 Å (1 Å = 1 Angstrôm = $1.10^{-10}$ m). N.A. Briscoe et al ont enseigné que ces canaux monodimensionnels possèdent des poches latérales de profondeur 8,1 Å et de diamètre 6,8 x 5,8 Å (Zeolites, 8, 74, 1988).

La demande de brevet européen EP-A-0 042 226 décrit la zéolithe EU-1 de formule suivante:

au moins 10 $XO_2$ : $Y_2O_3$ : 0,5-1,5 $R_{2/n}O$ : 0-100 $H_2O$

où R représente un cation de valence n, X représente le silicium et/ou le germanium, Y représente au moins un élément choisi parmi l'aluminium, le fer, le gallium, le bore, ainsi que le procédé de préparation de ladite zéolithe EU-1. Le procédé de préparation comprend le mélange en milieu aqueux d'au moins une source d'un élément X, d'au moins une source d'un élément Y et d'un composé organique azoté jouant le rôle de structurant Q, qui est soit le dérivé alkylé d'un polyméthylène $\alpha$-$\omega$ diammonium, soit un produit de dégradation dudit dérivé, soit encore des précurseurs dudit dérivé. Le mélange réactionnel est ensuite placé sous pression autogène, à une température comprise entre 85 et 250°C, jusqu'à la formation de cristaux de zéolithe.

Dodwell et al (Zeolites, volume 5, 1985 May, pages 153 to 157) décrit la synthèse hydrothermale d'une zéoltihe EU-1 avec un mélange réactionnel ne contenant pas d'ions alcalins. Le cation hexamethonium sous la forme hydroxyde jouant le rôle d'agent structurant, suffit comme agent minéralisant et il n'est pas nécessaire d'ajouter un hydroxyde alcalin.

Amold et al (Microporoils and Mesoporous Materials, 67,2004, pages 205-213) décrit un procédé de synthèse d'une zéolithe de type structural EUO, de composition aluminosilicate ou gallosilicate utilisant un mélange réactionnel présentant une composition molaire riche en ions Na+. En effet, la quantité de NaOH ajoutée est ajustée de manière à ce que le rapport nNA+/nSi soit supérieur à 0,36 pour favoriser la formation de zéolithe.

Objet de l'invention

La présente invention porte sur un nouveau procédé de préparation d'une zéolithe EU-1 ayant un rapport $XO_2/Y_2O_3$ compris entre 10 et 100 comprenant les étapes suivantes :

a) le mélange en milieu aqueux d'au moins une source d'au moins un oxyde $XO_2$, X étant choisi parmi le silicium et/ou le germanium, d'au moins une source d'au moins un oxyde $Y_2O_3$, Y étant choisi parmi l'aluminium, le fer, le gallium et le bore et d'un structurant organique Q, ledit mélange réactionnel présentant la composition molaire suivante :

| | |
|---|---|
| $XO_2/Y_2O_3$ | : 10 à 100, |
| OH- /$XO_2$ | : 0,1 à 6,0, |
| ($M^{\pm}$ + O)/$\overline{Y_2O_3}$ | : 0,5 à 100 |
| Q/($M^{\pm}$ + Q) | : 0,1 à 1 |
| $H_6O/XO\underline{2}$ | : 1 à 100 |
| $M^{\pm}/XO_{\underline{2}}$ | : 0 à 0,15 |

<u>où M+ représente un cation monovalent choisi parmi les métaux alcalins ou l'ammonium, et Q est l'hydroxyde d'hexaméthonium,</u>
b) le séchage du mélange réactionnel issu de l'étape a) à une température inférieure à 200°C,
c) le traitement hydrothermal dans un autoclave du mélange réactionnel séché issu de l'étape b), ledit mélange réactionnel séché n'étant pas en contact avec une phase liquide au fond de l'autoclave.

Un avantage de l'invention est de fournir un nouveau procédé de préparation d'une zéolithe EU-1 permettant la réduction du temps de synthèse de ladite zéolithe EU-1.

Un autre avantage de l'invention est de fournir un nouveau procédé de préparation d'une zéolithe EU-1 permettant l'obtention d'une zéolithe EU-1 présentant une cristallinité supérieure à celle d'une zéolithe EU-1 obtenue par les procédés de préparation connus de l'Homme du métier.

Description de l'invention

Selon l'invention, l'étape a) du procédé de préparation d'une zéolithe EU-1 ayant un rapport $XO_2/Y_2O_3$ compris entre 10 et 100, de préférence compris entre 20 et 60 et de manière très préférée compris entre 30 et 50, consiste à préparer un mélange réactionnel aqueux et renfermant au moins une source d'au moins un oxyde $XO_2$, X étant choisi parmi le silicium et/ou le germanium, et de préférence X étant le silicium, au moins une source d'au moins un oxyde $Y_2O_3$, Y étant choisi parmi l'aluminium, le fer, le gallium et le bore et de préférence Y étant l'aluminium, et d'un agent structurant organique Q, Q étant l'hydroxyde d'hexaméthonium.

Ledit mélange réactionnel présente avantageusement la composition molaire suivante :

| | |
|---|---|
| $XO_2/Y_2O_3$ | : 10 à 100, de préférence de 20 à 60, de manière très préférée de 30 à 50 |
| $OH^-/XO_2$ | : 0,1 à 6,0, de préférence de 0,1 à 1,0 |
| $(M^+ + Q)/Y_2O_3$ | : 0,5 à 100 |
| $Q/(M^+ + Q)$ | : 0,1 à 1 |
| $H_2O/XO_2$ | : 1 à 100 |
| $M^+/XO_2$ | : 0,01 à 0,12. |

où $M^+$ représente un cation monovalent, provenant des sources des éléments X et Y, choisi parmi les métaux alcalins ou l'ammonium. De manière préférée, $M^+$ est le sodium $Na^+$.

Selon un mode de réalisation préféré de l'étape a) du procédé de préparation selon l'invention, ledit mélange est caractérisé par une teneur faible en cations monovalents $M^+$, de préférence en ions alcalins $Na^+$. De préférence ledit mélange est caractérisé par un rapport $Na^+/SiO_2$ compris entre 0 et 0,15 et de manière encore plus préférée, compris entre 0,01 et 0,12.

La source de l'élément X peut avantageusement être tout composé comprenant l'élément X et pouvant libérer cet élément en solution aqueuse sous forme réactive. Selon le mode de réalisation préféré dans lequel l'élément X est le silicium, la source de silicium peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple l"Aerosil" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous la marque déposée "LUDOX".

La source de l'élément Y peut avantageusement être tout composé comprenant l'élément Y et pouvant libérer cet élément en solution aqueuse sous forme réactive. Selon le mode de réalisation préféré dans lequel Y est l'aluminium, la source d'aluminium est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Selon un mode de réalisation préféré de l'étape a) du procédé de préparation selon l'invention, on fait réagir un mélange aqueux comportant de la silice, de l'aluminate de sodium et de l'hydroxyde d'hexaméthonium.

Selon un autre mode de réalisation préféré de l'étape a) du procédé de préparation selon l'invention, on fait réagir un mélange aqueux comportant de la silice, un alkoxyde d'aluminium et de l'hydroxyde d'hexaméthonium.

Les quantités desdits réactifs définis ci-dessus sont ajustées de manière à conférer à ce mélange réactionnel une composition permettant sa cristallisation en zéolithe EU-1.

Selon un mode de réalisation préféré de l'étape a) du procédé de préparation selon l'invention, il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation du solide cristallisé EU-1 au détriment d'impuretés. De tels germes comprennent des solides cristallisés, notamment des cristaux de zéolithe de type structuraux LTA, LTL, FAU, MOR, MAZ, OFF, FER, ERI, BEA, MFI, MTW, MTT, LEV, TON, NES ou EUO. Les germes cristallins sont généralement ajoutés dans un rapport massique germes/$XO_2$ compris entre 0,0001 et 0,1 $XO_2$. Conformément à l'étape b) du procédé de préparation selon l'invention, le mélange réactionnel issu de l'étape a) est séché à une température inférieure à 200°C et de préférence inférieure à 120°C et de manière très préférée inférieure à 100°C, en évaporant l'eau. Ce séchage est effectué par toutes techniques connues de l'Homme du métier et de manière préférée par chauffage, lequel est avantageusement effectué à une température

**EP 2 162 392 B1**

inférieure à 120°C et de manière préférée, à une température inférieure à 100°C. A la fin dudit séchage, on obtient un mélange réactionnel séché, constitué d'une phase solide de précurseurs de la zéolithe EU-1, contenant une teneur massique en eau h inférieure à 40% poids par rapport au poids total dudit mélange réactionnel séché, de manière préférée inférieure à 25% poids et de manière très préférée, inférieure à 20% poids.

Conformément à l'étape c) du procédé de préparation selon l'invention, ledit mélange réactionnel séché issu de l'étape b) du procédé de préparation est soumis à un traitement hydrothermal dans un autoclave, ledit mélange réactionnel séché n'étant pas en contact avec une phase liquide au fond de l'autoclave.

Une masse m du mélange réactionnel séché issu de l'étape b) du procédé de préparation selon l'invention, constitué d'une phase solide de précurseurs de la zéolithe EU-1, est avantageusement placée sur un support inoxydable, localisé dans la partie supérieure ou centrale d'un autoclave ayant un volume V, au fond duquel on introduit un volume d'eau distillée correspondant à une masse H d'eau distillée.

La densité de l'eau distillée étant égale à 1, on exprime la masse d'eau distillée H introduite au fond de l'autoclave et correspondant au volume d'eau distillée introduit en fonction du volume V de l'autoclave.

La masse H d'eau distillée introduite au fond de l'autoclave est avantageusement comprise entre 0 et 0,5V, de préférence entre 0 et 0,1 V et de manière très préférée, entre 0 et 0,06V. L'eau au fond de l'autoclave n'est pas en contact avec le mélange réactionnel séché constitué d'une phase solide de précurseurs de la zéolithe EU-1.

Pour permettre la formation de la zéolithe EU-1, l'étape c) du procédé de préparation selon la présente invention est réalisée en présence d'une phase liquide. On entend par phase liquide l'eau présente soit dans la phase solide de précurseurs solides de la zéolithe EU-1 constituant le mélange réactionnel séché, soit l'eau distillée introduite au fond de l'autoclave, soit les deux.

Avec l'augmentation de la température à l'intérieur de l'autoclave, l'eau distillée éventuellement introduite au fond de l'autoclave ainsi que l'eau éventuellement encore contenue dans la phase solide de précurseurs solides de la zéolithe EU-1 constituant le mélange réactionnel séché, s'évapore. Conformément à l'étape c) du procédé de préparation selon l'invention, la quantité totale d'eau dans l'autoclave, correspondant à la quantité d'eau contenue dans la phase solide de précurseurs solides de la zéolithe EU-1, additionnée à la quantité d'eau distillée introduite dans le fond de l'autoclave et qui est égale à 0,01*h*m + H, est telle que la pression générée par la vapeur d'eau atteigne au moins la pression en vapeur saturante, et que l'eau puisse re-condenser.

Conformément à l'étape c) du procédé de préparation selon l'invention, le mélange réactionnel séché n'est pas en contact avec une phase liquide au fond de l'autoclave, c'est à dire qu'il n'est en contact avec aucune autre phase liquide que celle provenant de la re-condensation de l'eau.

La teneur massique en eau h contenue dans la phase solide de précurseurs solides de la zéolithe EU-1 et la masse d'eau distillée H introduite au fond de l'autoclave ne sont donc pas simultanément nulles.

La quantité totale minimale d'eau nécessaire peut être estimée à l'aide de l'équation de Van der Waals suivante :

$$(P_{vap} + a * \frac{n^2}{V})(V - n * b) = n * R * T$$

où $P_{vap}$ est la pression en vapeur saturante de l'eau à la température T (Pa), T est la température du traitement hydrothermal (K), V est le volume de l'autoclave, n est le nombre de moles d'eau présentes dans l'autoclave, ici n est alors égal à (0,01*h*m + H)/M, où M est la masse molaire de l'eau (18 g*mol$^{-1}$), R est la constante de gaz (8.314472(15) J*mol$^{-1}$K$^{-1}$), a et b sont des constantes caractéristiques de l'eau et se calculent à l'aide des relations suivantes :

$$a = 27 * \frac{R^2 * T_c^2}{64 * P_c} = 0,55350 \, Pa * \left(\frac{m^3}{mol}\right)^2 \quad et \quad b = \frac{R * T_c}{8 * P_c} = 0,00003 \, \frac{m^3}{mol}$$, où $T_c$ est la température critique de l'eau (647.24 K) et Pc est la pression critique de l'eau (22064 Pa) (CRC Handbook of Chemistry and Physics 82e édition).

Plus précisément, trois modes de réalisation préférés de l'étape c) du procédé de préparation selon l'invention peuvent être mis en oeuvre.

Selon un premier mode de réalisation préféré de l'étape c) du procédé de préparation selon l'invention, on introduit dans l'autoclave le mélange réactionnel issu de l'étape b), totalement séché, c'est à dire contenant une teneur massique en eau h égale à 0% et on introduit au fond de l'autoclave une masse H d'eau distillée. L'introduction globale d'eau est telle que la quantité totale d'eau dans l'autoclave est supérieure ou égale à la quantité d'eau qui satisfait l'équation de Van der Waals.

Selon un deuxième mode de réalisation préféré de l'étape c) du procédé de préparation selon l'invention, on introduit dans l'autoclave le mélange réactionnel issu de l'étape b) partiellement séché, c'est à dire contenant une quantité massique en eau h et on introduit dans le fond de l'autoclave une masse H d'eau distillée. L'introduction globale d'eau est telle que la quantité totale d'eau dans l'autoclave est supérieure ou égale à la quantité d'eau qui satisfait l'équation de Van der Waals.

Selon un troisième mode de réalisation préféré de l'étape c) du procédé de préparation selon l'invention, on introduit dans l'autoclave le mélange réactionnel issu de l'étape b) partiellement séché jusqu'à une teneur massique en eau h. L'introduction globale d'eau est telle que la quantité totale d'eau dans l'autoclave, à savoir la quantité d'eau contenue dans la phase solide de précurseurs solides de la zéolithe EU-1 constituant le mélange réactionnel séché, est supérieure ou égale à la quantité d'eau qui satisfait l'équation de Van der Waals.

Selon ce troisième mode de réalisation préféré, on n'introduit pas d'eau distillée dans le fond de l'autoclave.

L'étape c) du procédé de préparation selon l'invention est de préférence réalisée selon les premier et deuxième modes de réalisation décrits ci-dessus.

Le mélange réactionnel séché issu de l'étape b) du procédé de préparation selon l'invention est avantageusement mis sous les conditions hydrothermales de l'étape c) suivantes : sous une pression de réaction autogène, à une température comprise entre 120°C et 220°C, de préférence entre 140°C et 200°C, et de manière très préférée à une température comprise entre 150 et 190°C jusqu'à la formation des cristaux de solide EU-1.

Le temps de réaction nécessaire pour obtenir la cristallisation de la zéolithe EU-1 varie généralement entre 1 heure et plusieurs mois et de préférence entre 1 jour et 3 semaines, et de manière plus préférée entre 2 et 8 jours, en fonction de la composition des réactifs dans le mélange réactionnel et de la température de réaction.

A l'issu de l'étape c) du procédé de préparation selon l'invention, la phase solide cristallisée obtenue est lavée. La zéolithe EU-1, de type structural EUO ainsi obtenue par le procédé de préparation selon l'invention est dite brute de synthèse. Elle est ensuite prête pour des étapes ultérieures telles que le séchage, la déshydratation et la calcination et/ou l'échange d'ions.

Pour ces étapes, toutes les méthodes conventionnelles connues de l'Homme du métier peuvent être employées.

La zéolithe EU-1 ainsi obtenue est identifiée par diffractométrie de rayons X. Sa cristallinité est calculée à partir du diagramme de diffraction par comparaison avec une zéolithe de type structural EUO de référence ayant une cristallinité donnée. Dans les exemples de la présente demande, la zéolithe de type structural EUO de référence est choisie comme étant la zéolithe EU-1 préparée selon le procédé de l'invention dans l'exemple 1, sa cristallinité est donc fixée à 100%. La cristallinité correspond au rapport de la surface des pics des solides analysés sur la surface des pics de la zéolithe de type structural EUO de référence, après soustraction du bruit de fond dans le domaine d'angle de diffraction $2\theta$ de 13° à 32°.

La zéolithe EU-1 obtenue par le procédé de préparation selon la présente invention présente un diagramme de diffraction conforme à celui des zéolithes de type structural EUO et elle présente une cristallinité de préférence supérieure à 90 %, de manière préférée supérieure à 95 % et de manière très préférée supérieure à 98 %.

Le procédé de préparation d'une zéolithe EU-1 ayant un rapport $XO_2/Y_2O_3$ compris entre 10 et 100 selon l'invention permet donc l'obtention d'une zéolithe EU-1 présentant une cristallinité supérieure à celle d'une zéolithe EU-1 obtenue par les procédés de préparation connus de l'Homme du métier.

La zéolithe EU-1 obtenue par le procédé de préparation selon la présente invention présente, de préférence, une cristallinité de 10% supérieure et de manière préférée, de 20% supérieure à celle d'une zéolithe EU-1 obtenue par un procédé de préparation ne comportant ni l'étape b), ni l'étape c) du procédé selon l'invention.

Les exemples suivants illustrent l'invention sans en limiter la portée.

## Exemples

**Exemple 1:** *preparation d'une zéolithe EU-1 ayant un rapport $SiO_2/Al_2O_3$ de 40 et un rapport $Na^+/SiO_2$ de 0,09 selon le procédé de préparation de la présente invention.*

Une solution aqueuse d'hydroxyde d'hexaméthonium est préparée en laissant réagir 6 g de bromure d'hexaméthonium (Acros) avec 4,6 g d'oxyde d'argent (Alfa Aesar) dans 12 g d'eau distillée. Ce mélange est laissé sous agitation pendant une nuit à l'abri de la lumière. Après séparation du précipité d'AgBr par filtration, on récupère une solution à 25% en hydroxyde d'hexaméthonium. Ensuite 9,41 g de cette solution sont ajoutés à 9,97 g de silice colloïdale (Ludox HS40, Sigma Aldrich) et 26,9 g d'eau distillée. Après 30 minutes d'agitation vigoureuse, on ajoute une solution formée par 0,31 g d'aluminate de sodium (Carlo Erba) et 13,4 g d'eau distillée. Ce mélange est mûri pendant 2 heures. La composition molaire du mélange réactionnel est la suivante :

$SiO_2/Al_2O_3 = 40$
$OH^-/SiO_2 = 0,3$
$(Na^+ + HM(OH)_2) / Al_2O) = 9,5$
(HM: cation hexaméthonium)

$HM(OH)_2 / (Na^+ + HM(OH)_2) = 0,6$

$H_2O / SiO_2 = 45$

$Na^+ /SiO_2 = 0,09$

Le mélange réactionnel est alors séché par chauffage sous agitation à 80°C jusqu'à l'obtention d'une poudre sèche, sans aucune trace d'eau (h = 0%). 5 g de cette poudre sèche sont placées sur un support en inox qui est localisé dans la partie centrale d'un autoclave en inox ayant un volume V=100 mL. Au fond de l'autoclave on introduit 5 mL d'eau distillée (H = 5g). La quantité totale d'eau dans l'autoclave est égale à 5 g. D'après l'équation de Van der Waals, une quantité d'eau de 0,5 g est suffisante pour générer une phase liquide à 180°C dans un autoclave de 100 mL. Pendant le traitement hydrothermal on est alors bien en présence d'une phase liquide. Le traitement hydrothermal est réalisé pendant une durée de 7 jours à 180°C par introduction de l'autoclave dans une étuve ventilée Binder de 50 L. Le produit est récupéré, lavé avec 500 ml d'eau distillée et séché à 100°C.

Une analyse par diffraction de rayons X montre que l'échantillon s'est transformé complètement en zéolithe EU-1. La cristallinité de cet échantillon est prise comme référence et fixée arbitrairement à 100%.

**Exemple 2 comparatif :**

Cet échantillon est préparé selon le mode opératoire décrit à l'exemple 1 (h = 0%), sauf qu'on n'introduit pas d'eau distillée au fond de l'autoclave (H = 0g) et que la quantité totale d'eau dans l'autoclave est égale à 0 mL. Après 7 jours de traitement hydrothermal à 180°C, une analyse par diffraction de rayons X montre que l'échantillon est encore complètement amorphe.

**Exemple 3 :** *préparation d'une zéolithe EU-1 ayant un rapport $SiO_2/Al_2O_3$ de 40 et un rapport $Na^+/SiO_2$, de 0,09 selon le procédé de préparation de la présente invention.*

Cet échantillon est préparé selon le mode opératoire décrit à l'exemple 1, par contre, le séchage est arrêté lorsque le mélange réactionnel séché renferme une teneur massique en eau h = 15% d'eau. Au fond de l'autoclave on n'introduit pas d'eau distillée (H = 0g). La quantité totale d'eau dans l'autoclave est égale à 0,75 g. Après 7 jours de traitement hydrothermal à 180°C, une analyse par diffraction de rayons X montre que l'échantillon s'est transformé complètement en zéolithe EU-1. La cristallinité de l'échantillon est de 95% par rapport à l'échantillon de référence fixée dans l'exemple 1.

**Exemple 4 :** *préparation d'une zéolithe EU-1 avant un rapport $SiO_2/Al_2O_3$ de 40 et un rapport $Na^+/SiO_2$ de 0,09 selon le procédé de préparation de la présente invention.*

Cet échantillon est préparé selon le mode opératoire décrit à l'exemple 1 (h = 0% et H = 5g), sauf que le traitement hydrothermal à 180°C est arrêté après 3 jours. Une analyse par diffraction de rayons X montre que l'échantillon s'est transformé en zéolithe EU-1 et la cristallinité de l'échantillon est de 99% par rapport à l'échantillon de référence fixée dans l'exemple 1.

**Exemple 5 :** *préparation d'une zéolithe EU-1 ayant un rapport $SiO_2/Al_2O_3$ de 30 et un rapport $Na^+/SiO_2$ de 0,15 selon le procédé de préparation de la présente invention.*

La solution d'hydroxyde d'hexaméthonium est préparée comme décrit à l'exemple 1. Ensuite 9,36 g de cette solution sont ajoutés à 9,92 g de silice colloïdale (Ludox HS40, Sigma Aldrich) et 26,7 g d'eau distillée. Après 30 minutes d'agitation vigoureuse, on ajoute une solution formée par 0,62 g d'aluminate de sodium (Carlo Erba) et 13,3 g d'eau distillée. Ce mélange est mûri pendant 2 heures.

La composition molaire du mélange réactionnel est :

$SiO_2 / Al_2O_3 = 30$

$OH^- / SiO_2 = 0,3$

$(Na^+ + HM(OH)_2) / Al_2O_3 = 6$

(HM: cation hexaméthonium)

$HM(OH)_2 / (Na^+ + HM(OH)_2) = 0,5$

$H_2O / SiO_2 = 45$

$Na^+/SiO_2 = 0,15$

Le séchage et le traitement hydrothermal sont effectués comme décrit à l'exemple 1 (h = 0% et H = 5g). Le produit est récupéré, lavé à l'eau distillée (500 mL) et séché à 100°C.

Une analyse par diffraction de rayons X montre que l'échantillon s'est transformé complètement en zéolithe EU-1. La cristallinité de l'échantillon est de 90% par rapport à l'échantillon de référence fixée dans l'exemple 1.

**Exemple 6 :** *préparation d'une zéolithe EU-1 avant un rapport $SiO_2/Al_2O_3$ de 60 et un rapport $Na^+/SiO_2$ de 0,06 selon le procédé de préparation de la présente invention.*

Une solution aqueuse d'hydroxyde d'hexaméthonium est préparée comme décrit à l'exemple 1. Ensuite 9,42 g de cette solution sont ajoutés à 9,98 g de silice colloïdale (Ludox HS40, Sigma Aldrich) et 27,0 g d'eau distillée. Après 30 minutes d'agitation vigoureuse, on ajoute une solution formée par 0,21 g d'aluminate de sodium (Carlo Erba) et 13,5 g d'eau distillée. Ce mélange est mûri pendant 2 heures.

La composition molaire du mélange réactionnel est :

$SiO_2/Al_2O_3$ = 60
$OH^-$ / $SiO_2$ = 0,3
$(Na^+ + HM(OH)_2)$ / $Al_2O_3$ = 12,8
(HM: cation hexaméthonium)
$HM(OH)_2$ / $(Na^+ + HM(OH)_2)$ = 0,7
$H_2O$ / $SiO_2$ = 45
$Na^+/SiO_2$ = 0,06

Le séchage et le traitement hydrothermal sont effectués comme décrit à l'exemple 1 (h = 0% et H = 5g). Le produit est récupéré, lavé à l'eau distillée (500 mL) et séché à 100°C.

Une analyse par diffraction de rayons X montre que l'échantillon s'est transformé complètement en zéolithe EU-1. La cristallinité de l'échantillon est de 99% par rapport à l'échantillon de référence fixée dans l'exemple 1.

**Exemple comparatif 7:** *préparation d'une zéolithe EU-1 ayant un rapport $SiO_2/Al_2O_3$ de 40 et un rapport $Na^+/SiO_2$ de 0,09 selon un procédé ne comportant ni l'étape b) de séchage ni l'étape c) du procédé selon l'invention, mais un traitement hydrothermal classique.*

Une solution aqueuse d'hydroxyde d'hexaméthonium est préparée comme décrit à l'exemple 1. Ensuite 9,97 g de cette solution sont ajoutés à 9,41 g de silice colloïdale (Ludox HS40, Sigma Aldrich) et 26,9 g d'eau distillée. Après 30 minutes d'agitation vigoureuse, on ajoute une solution formée par 0,31 g d'aluminate de sodium (Carlo Erba) et 13,4 g d'eau distillée. Ce mélange est mûri pendant 2 heures.

La composition molaire du mélange réactionnel est :

$SiO_2$/ $Al_2O_3$ = 40
$OH^-$ / $SiO_2$ = 0,3
$(Na^+ + HM(OH)_2)$ / $Al_2O_3$ = 9,5
(HM: cation hexaméthonium)
$HM(OH)_2$ / $(Na^+ + HM(OH)_2)$ = 0,6
$H_2O$ / $SiO_2$ = 45
$Na^+/SiO_2$ = 0,09

Le mélange réactionnel est transféré dans un autoclave en inox (Autoclave France) de volume V = 100 mL. Le traitement hydrothermal est effectué sans agitation pendant une durée de 7 jours à 180°C par introduction de l'autoclave dans une étuve ventilée Binder de 50 L. Le produit est récupéré, lavé à l'eau distillée (500 mL) et séché à 100°C. Une analyse par diffraction de rayons X montre que l'échantillon s'est transformé complètement en zéolithe EU-1. La cristallinité de l'échantillon est de 81% par rapport à l'échantillon de référence fixée dans l'exemple 1.

**Exemple 8 comparatif** : *préparation d'une zéolithe EU-1 ayant un rapport $SiO_2/Al_2O_3$ de 40 et un rapport $Na^+/SiO_2$ de 0,09 selon un procédé ne comportant ni l'étape b) de séchage ni l'étape c) du procédé selon l'invention, mais un traitement hydrothermal classique.*

Cet échantillon est préparé selon le mode opératoire décrit à l'exemple comparatif 8. Par contre, le traitement hydrothermal à 180°C est arrêté après 3 jours. Une analyse par diffraction de rayons X montre que l'échantillon s'est transformé partiellement en zéolithe EU-1. Une partie de l'échantillon est encore amorphe. La cristallinité est de 49% par rapport à l'échantillon de référence fixée dans l'exemple 1.

**Revendications**

1. Procédé de préparation d'une zéolithe EU-1 ayant un rapport $XO_2/Y_2O_3$ compris entre 10 et 100 comprenant les étapes suivantes :

    a) mélange en milieu aqueux d'au moins une source d'au moins un oxyde $XO_2$, X étant choisi parmi le silicium et/ou le germanium, d'au moins une source d'au moins un oxyde $Y_2O_3$, Y étant choisi parmi l'aluminium, le fer, le gallium et le bore et d'un structurant organique Q, ledit mélange réactionnel présentant la composition molaire suivante :

    $XO_2/Y_2O_3$ : 10 à 100,
    $OH^-/XO_2$ : 0,1 à 6,0,
    $(M^+ + Q)/Y_2O_3$ : 0,5 à 100
    $Q/(M^+ + Q)$ : 0,1 à 1
    $H_2O/XO_2$ : 1 à 100
    $M^+/XO_2$ : 0 à 0,15

    où $M^+$ représente un cation monovalent choisi parmi les métaux alcalins ou l'ammonium, et Q est l'hydroxyde d'hexaméthonium.
    b) séchage du mélange réactionnel issu de l'étape a) à une température inférieure à 200°C,
    c) traitement hydrothermal dans un autoclave du mélange réactionnel séché issu de l'étape b), ledit mélange réactionnel séché n'étant pas en contact avec une phase liquide au fond de l'autoclave.

2. Procédé de préparation selon la revendication 1 dans lequel X est le silicium, Y est l'aluminium.

3. Procédé de préparation selon l'une des revendications 1 ou 2 dans lequel $M^+/XO_2$ est compris entre 0,01 à 0,12.

4. Procédé de préparation selon l'une des revendication 1 à 3 dans lequel $M^+$ est le sodium $Na^+$.

5. Procédé de préparation selon l'une des revendications 1 à 4 dans lequel le rapport $Na^+/SiO_2$ est compris entre 0,01 et 0,12.

6. Procédé de préparation selon l'une des revendications 1 à 5 dans lequel on utilise des germes comprenant des solides cristallisés de type structuraux LTA, LTL, FAU, MOR, MAZ, OFF, FER, ERI, BEA, MFI, MTW, MTT, LEV, TON, NES ou EUO, les germes cristallins étant généralement ajoutés dans un rapport massqiue germes/$XO_2$ compris entre 0,0001 et 0,1 $XO_2$.

7. Procédé de préparation selon l'une des revendications 1 à 6 dans lequel le séchage selon l'étape b) du mélange réactionnel est réalisé à une température inférieure à 120°C.

8. Procédé de préparation selon la revendication 7 dans lequel le séchage selon l'étape b) du mélange réactionnel est réalisé à une température inférieure à 100°C.

9. Procédé de préparation selon l'une des revendications 1 à 8 dans lequel on introduit dans l'autoclave le mélange réactionnel issu de l'étape b), totalement séché, c'est à dire contenant une teneur massique en eau h égale à 0% et on introduit au fond de l'autoclave une masse H d'eau distillée.

10. Procédé de préparation selon l'une des revendications 1 à 8 dans lequel on introduit dans l'autoclave le mélange réactionnel issu de l'étape b) partiellement séché, c'est à dire contenant une quantité massique en eau h et on introduit dans le fond de l'autoclave une masse H d'eau distillée.

11. Procédé de préparation selon l'une des revendications 1 à 8 dans lequel on introduit dans l'autoclave le mélange réactionnel issu de l'étape b) partiellement séché jusqu'à une teneur massique en eau h.

12. Procédé de préparation selon l'une des revendications 1 à 11 dans lequel l'étape c) opère sous les conditions hydrothermales suivantes : une pression de réaction autogène, une température comprise entre 120°C et 200°C.

**13.** Procédé de préparation selon l'une des revendications 1 à 12 dans lequel le temps de réaction varie entre 1 heure et plusieurs mois.

**14.** Procédé de préparation selon la revendication 13 dans lequel le temps de réaction varie entre 1 jour et 3 semaines.

**15.** Procédé de préparation selon l'une des revendications 13 et 14 dans lequel le temps de réaction varie entre 2 et 8 jours.

**Claims**

**1.** A process for preparing an EU-1 zeolite having a $XO_2/Y_2O_3$ ratio in the range 10 to 100, comprising the following steps:

a) mixing, in an aqueous medium, at least one source of at least one oxide $XO_2$, X being selected from silicon and/or germanium, at least one source of at least one oxide $Y_2O_3$, Y being selected from aluminium, iron, gallium and boron, and one organic template Q, said reaction mixture having the following molar composition:

$$
\begin{array}{ll}
XO_2/Y_2O_3 & : 10 \text{ to } 100; \\
OH^-/XO_2 & : 0.1 \text{ to } 6.0; \\
(M^+ + Q)/Y_2O_3 & : 0.5 \text{ to } 100; \\
Q/(M^+ + Q) & : 0.1 \text{ to } 1; \\
H_2O/XO_2 & : 1 \text{ to } 100; \\
M^+/XO_2 & : 0 \text{ to } 0.15;
\end{array}
$$

where $M^+$ represents a monovalent cation selected from alkali metals and ammonium, and Q is hexamethonium hydroxide,
b) drying the reaction mixture derived from step a) at a temperature of less than 200°C;
c) hydrothermal treatment of the dried reaction mixture derived from step b) in an autoclave, said dried reaction mixture not being in contact with a liquid phase at the bottom of the autoclave.

**2.** A preparation process according to claim 1, in which X is silicon, Y is aluminium.

**3.** A preparation process according to one of claims 1 or 2, in which $M^+/XO_2$ is in the range 0.01 to 0.12.

**4.** A preparation process according to one of claims 1 to 3, in which $M^+$ is sodium, $Na^+$.

**5.** A preparation process according to one of claims 1 to 4, in which the ratio $Na^+/SiO_2$ is in the range 0.01 to 0.12.

**6.** A preparation process according to one of claims 1 to 5, in which seeds comprising crystalline solids with structure types LTA, LTL, FAU, MOR, MAZ, OFF, FER, ERI, BEA, MFI, MTW, MTT, LEV, TON, NES or EUO are used, the crystalline seeds generally being added in a seeds/$XO_2$ ratio in the range 0.0001 to 0.1 $XO_2$ by weight.

**7.** A preparation process according to one of claims 1 to 6, in which step b) for drying the reaction mixture is carried out at a temperature of less than 120°C.

**8.** A preparation process according to claim 7, in which step b) for drying the reaction mixture is carried out at a temperature of less than 100°C.

**9.** A preparation process according to one of claims 1 to 8, in which the reaction mixture derived from step b), which has been completely dried, i.e. containing a quantity by weight of water, h, equal to 0%, is introduced into the autoclave and a mass, H, of distilled water is introduced into the bottom of the autoclave.

**10.** A preparation process according to one of claims 1 to 8, in which the reaction mixture derived from step b), which has been partially dried, i.e. containing a quantity by weight of water, h, is introduced into the autoclave, and a mass, H, of distilled water is introduced into the bottom of the autoclave.

**11.** A preparation process according to one of claims 1 to 8, in which the reaction mixture derived from step b), which has been partially dried to a mass content, h, of water, is introduced into the autoclave.

12. A preparation process according to one of claims 1 to 11, in which step c) is carried out under the following hydrothermal conditions: an autogenous reaction pressure, and a temperature in the range 120°C to 200°C.

13. A preparation process according to one of claims 1 to 12, in which the reaction time varies between 1 hour and several months.

14. A preparation process according to claim 13, in which the reaction time varies between 1 day and 3 weeks.

15. A preparation process according to claim 13 or claim 14, in which the reaction time is in the range 2 to 8 days.

**Patentansprüche**

1. Verfahren zur Herstellung eines EU-1-Zeolithen, der ein $XO_2/Y_2O_3$-Verhältnis im Bereich zwischen 10 und 100 aufweist, das die folgenden Schritte umfasst:

   a) Mischen in wässrigen Medium mindestens einer Quelle mindestens eines Oxids $XO_2$, wobei X aus Silicium und/oder Germanium ausgewählt ist, mindestens einer Quelle mindestens eines Oxids $Y_2O_3$, wobei Y aus Aluminium, Eisen, Gallium und Bor ausgewählt ist und mindestens eines organischen Strukturmittels Q, wobei das Reaktionsgemisch die folgende Molzusammensetzung aufweist:

   | | |
   |---|---|
   | $XO_2/Y_2O_3$ | : 10 bis 100, |
   | $OH^-/XO2$ | : 0,1 bis 6,0, |
   | $(M^+ + Q)/Y_2O_3$ | : 0,5 bis 100 |
   | $Q/(M^+ + Q)$ | : 0,1 bis 1 |
   | $H_2O/XO_2$ | : 1 bis 100 |
   | $M^+/XO_2$ | : 0 bis 0,15 |

   wobei $M^+$ für ein einwertiges Kation steht, das aus Alkalimetallen oder Ammonium ausgewählt ist, und Q Hexamethoniumhydroxid ist.
   b) Trocknen des Reaktionsgemischs aus Schritt a) bei einer Temperatur unterhalb von 200 °C,
   c) hydrothermische Behandlung des getrockneten Reaktionsgemischs aus Schritt b) in einem Autoklaven, wobei das getrocknete Reaktionsgemisch nicht mit einer flüssigen Phase am Boden des Autoklaven in Kontakt ist.

2. Verfahren zur Herstellung nach Anspruch 1, wobei X Silicium ist, Y Aluminium ist.

3. Verfahren zur Herstellung nach einem der Ansprüche 1 oder 2, wobei $M^+/XO_2$ im Bereich zwischen 0,01 und 0,12 liegt.

4. Verfahren zur Herstellung nach einem der Ansprüche 1 bis 3, wobei $M^+$ Natrium $Na^+$ ist.

5. Verfahren zur Herstellung nach einem der Ansprüche 1 bis 4, wobei das $Na^+/SiO_2$-Verhältnis im Bereich zwischen 0,01 und 0,12 liegt.

6. Verfahren zur Herstellung nach einem der Ansprüche 1 bis 5, wobei man Keime verwendet, die kristalline Feststoffe vom Strukturtyp LTA, LTL, FAU, MOR, MAZ, OFF, FER, ERI, BEA, MFI, MTW, MTT, LEV, TON, NES oder EUO umfassen, wobei die Kristallisationskeime im Allgemeinen in einem Keime/$XO_2$-Masseverhältnis im Bereich zwischen 0,0001 und 0,1 $XO_2$ zugegeben werden.

7. Verfahren zur Herstellung nach einem der Ansprüche 1 bis 6, wobei das Trocknen des Reaktionsgemischs gemäß Schritt b) bei einer Temperatur unterhalb von 120 °C ausgeführt wird.

8. Verfahren zur Herstellung nach Anspruch 7, wobei das Trocknen des Reaktionsgemischs gemäß Schritt b) bei einer Temperatur unterhalb von 100 °C ausgeführt wird.

9. Verfahren zur Herstellung nach einem der Ansprüche 1 bis 8, wobei in den Autoklaven das vollständig getrocknete Reaktionsgemisch aus Schritt b), das heißt mit einem Massegehalt an Wasser h gleich 0 %, eingeführt wird, und am Boden des Autoklaven eine Masse H an destilliertem Wasser eingeführt wird.

10. Verfahren zur Herstellung nach einem der Ansprüche 1 bis 8, wobei in den Autoklaven das teilweise getrocknete Reaktionsgemisch aus Schritt b), das heißt mit einem Massegehalt an Wasser h, eingeführt wird, und am Boden des Autoklaven eine Masse H an destilliertem Wasser eingeführt wird.

11. Verfahren zur Herstellung nach einem der Ansprüche 1 bis 8, wobei das teilweise bis zu einem Massegehalt an Wasser h getrocknete Reaktionsgemisch aus Schritt b) in den Autoklaven eingeführt wird.

12. Verfahren zur Herstellung nach einem der Ansprüche 1 bis 11, wobei Schritt c) unter den folgenden hydrothermischen Bedingungen betrieben wird: einem autogenen Druck der Reaktion, einer Temperatur im Bereich zwischen 120 °C und 200 °C.

13. Verfahren zur Herstellung nach einem der Ansprüche 1 bis 12, wobei die Reaktionszeit zwischen 1 Stunde und mehreren Monaten variiert.

14. Verfahren zur Herstellung nach Anspruch 13, wobei die Reaktionszeit zwischen 1 Tag und 3 Wochen variiert.

15. Verfahren zur Herstellung nach einem der Ansprüche 13 und 14, wobei die Reaktionszeit zwischen 2 und 8 Tagen variiert.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0042226 A

**Littérature non-brevet citée dans la description**

- **W.M. MEIER ; D.H. OLSON.** Atlas of Zeolite Structure types. 2001
- *Zeolites,* 1988, vol. 8, 74
- **DODWELL et al.** *Zeolites,* Mai 1985, vol. 5, 153-157
- **AMOLD et al.** *Microporoils and Mesoporous Materials,* 2004, vol. 67, 205-213